# EUROPÄISCHE PATENTSCHRIFT

(11) **EP 3 554 974 B1**
(45) Veröffentlichungstag und Bekanntmachung des Hinweises auf die Patenterteilung: **14.06.2023**
(21) Anmeldenummer: 17821848.3
(22) Anmeldetag: 11.12.2017
(51) Int. Cl.: B65G 47/52, C21D 1/00, F27B 9/24

(54) **VORRICHTUNG ZUM TRANSPORTIEREN MINDESTENS EINES AUFGEHEIZTEN BAUTEILS**
DEVICE FOR TRANSPORTING AT LEAST ONE HEATED COMPONENT
DISPOSITIF DESTINÉ AU TRANSPORT D'AU MOINS UNE PIÈCE CHAUFFÉE

(30) Priorität: 16.12.2016 DE 102016124648
(43) Veröffentlichungstag der Anmeldung: 23.10.2019
(73) Patentinhaber: Schwartz GmbH, 52152 Simmerath (DE)
(72) Erfinder: WINKEL, Jörg, 52385 Nideggen-Schmidt (DE); REINARTZ, Andreas, 52156 Monschau (DE); WILDEN, Frank, 52152 Simmerath (DE)
(74) Vertreter: Keenway Patentanwälte Neumann Heine Taruttis
(86) Internationale Anmeldenummer: PCT/EP2017/082210
(87) Internationale Veröffentlichungsnummer: WO 2018/108806

(56) Entgegenhaltungen:
- EP-A1- 1 900 830
- CN-A- 1 847 115
- CN-A- 102 774 640
- CN-A- 103 193 080
- JP-A- 2002 048 476

## Beschreibung

Die Erfindung betrifft eine Vorrichtung und ein Verfahren zum Transportieren mindestens eines aufgeheizten Bauteils sowie eine Verwendung der Vorrichtung zum Transportieren mindestens eines aufgeheizten Bauteils.

Es ist bekannt, metallische Bauteile, wie beispielsweise Bleche, Platinen, Halbzeuge oder dergleichen zum Einstellen ihrer Härte und/oder Festigkeit einem Wärmebehandlungsprozess zu unterziehen. So ist es zur Herstellung von Karosseriebauteilen von Kraftfahrzeugen, wie z. B. A- und B-Säulen, Seitenaufprallschutzträger in Türen, Schweller, Rahmenteile, Stoßstangenfänger, Querträger für Boden und Dach, vordere und hintere Längsträger bekannt, diese auf Basis eines Bauteils, insbesondere eines Stahlblechs oder einer Platine, zu fertigen, wobei das regelmäßig vorbeschichtete Bauteil zunächst in einem Ofen erwärmt und anschließend in einem Pressenwerkzeug in die gewünschte Form gebracht und gehärtet wird. Hierzu kann das Pressenwerkzeug während des Pressvorganges entsprechend gekühlt werden. Diese Herstellungsweise wird auch als Presshärten bezeichnet.

Zur Durchführung eines möglichst effizienten Wärmebehandlungsprozesses, der den Taktzeitanforderungen der Fahrzeugindustrie genügt, haben sich Wärmebehandlungslinien mit einem Durchlaufofen, insbesondere Rollenherdofen, und einem diesem nachgeordneten Presshärtewerkzeug etabliert. Auf seinem Weg von dem Durchlaufofen hin zu dem Presshärtewerkzeug weist ein zu härtendes Bauteil regelmäßig zumindest Teilbereiche auf, deren Temperatur oberhalb der Austenitisierungstemperatur liegt. Dementsprechend sind an Transportvorrichtungen, die das Bauteil von dem Durchlaufofen hin zu dem Presshärtewerkzeug führen hohe thermische Anforderungen zu stellen. Insbesondere zur direkten Entnahme des Bauteils aus dem Durchlaufofen haben sich Transportvorrichtungen etabliert, die über eine Vielzahl von Stahlrollen verfügen, die eine Transportebene für das aufgeheizte Bauteil definieren und ein vollständiges Ausfördern des aufgeheizten Bauteils aus dem Durchlaufofen in der Durchlaufrichtung ermöglichen. Entsprechende Transportvorrichtungen werden auch als sogenannter Entnahmerollgang bezeichnet.

Eine entsprechende Transportvorrichtung ist beispielsweise aus der CN 1847115 A bekannt. In dieser wird ein Bauteil mittels einer Laufkatze auf eine Hebeeinrichtungen verfahren und im Anschluss von der Hebeeinrichtung in eine erhöhte Ebene angehoben und dort verbracht. Auch aus der CN 103 193 080 A ist eine vergleichbare Vorrichtung bekannt.

Um das aufgeheizte Bauteil von der Transportvorrichtung in das Presshärtewerkzeug zu verbringen wurden bereits (automatisierte) Greifer vorgeschlagen, die das auf der Transportvorrichtung aufliegende, aufgeheizte Bauteil aufgreifen und in das Presshärtewerkzeug einlegen. Hierbei ergibt sich regelmäßig das Problem, dass ein großflächiger wärmeleitender Kontakt zwischen den Greifwerkzeugen des Greifers und dem aufgeheizten Bauteil nicht realisierbar ist, da ein solcher Kontakt zu ungewünschten Temperaturreduktionen an der Bauteiloberfläche führt, die an dem das Presshärtewerkzeug verlassenden, gehärteten Bauteil zu erkennen sind. Daher wurden Greifer vorgeschlagen, die die Kanten des aufgeheizten Bauteils umgreifen können, um so einen großflächigen Kontakt an der Bauteilober- oder -unterseite zu vermeiden.

Um ein derartiges Umgreifen der Bauteilkanten ermöglichen zu können, muss das Bauteil jedoch zunächst aus der Transportebene in eine höhergelegene, zu den Rollen beabstandete Entnahmeebene verbracht werden, da die Rollen der Transportvorrichtung den Greifwerkzeugen sonst regelmäßig im Weg wären. Hierbei ergibt sich das Problem, dass die in dem Durchlaufofen erwärmten und mittels der Transportvorrichtung zu transportierenden Bauteile nicht stets dieselbe Größe aufweisen, so dass an ein Werkzeug, das die Bauteile von der Transportebene in die Entnahmeebene verbringen soll vergleichsweise hohe Anforderungen zu stellen sind. Hierbei ist zum einen zu berücksichtigen, dass ein entsprechendes Werkzeug keine zu kleine Auflagefläche für die Bauteil bieten darf, da die regelmäßig vergleichsweise dünnwandigen und aufgeheizten Bauteile sonst eine ungewünschte Wölbung annehmen könnten. Zum anderen ist zu berücksichtigen, dass eine große, wärmeleitende Kontaktfläche zwischen dem Werkzeug und dem Bauteil aus den oben angeführten Gründen zu vermeiden ist.

Dies vorangestellt sollte ein Werkzeug zum Verbringen der aufgeheizten Bauteile von der Transportebene in die Entnahmeebene möglichst an verschiedene Bauteile, insbesondere an verschiedene Bauteillängen und/oder Bauteilbreiten anpassbar sein. Hierbei sind ferner die hohen Taktzeitanforderungen der Fahrzeugindustrie zu berücksichtigen, so dass eine gegebenenfalls erforderliche Umrüstzeit für das Werkzeug möglichst kurz sein sollte.

Hiervon ausgehend ist es Aufgabe der vorliegenden Erfindung, die mit Bezug auf den Stand der Technik geschilderten Probleme zumindest teilweise zu lösen. Insbesondere sollen eine Vorrichtung und ein Verfahren zum Transportieren mindestens eines aufgeheizten Bauteils sowie eine Verwendung der Vorrichtung zum Transportieren mindestens eines aufgeheizten Bauteils angegeben werden, die ein bauteilindividuelles Transportieren mit möglichst kurzen Umrüstzeiten erlauben. Zudem soll die Vorrichtung bei hohen (Bauteil-)Temperaturen einsetzbar sein.

Diese Aufgaben werden gelöst durch die Merkmale der unabhängigen Patentansprüche. Weitere vorteilhafte Ausgestaltungen der hier vorgeschlagenen Lösung sind in den abhängigen Patentansprüchen angegeben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Eine erfindungsgemäße Vorrichtung zum Transportieren mindestens eines aufgeheizten Bauteils umfasst zumindest die folgenden Komponenten:
- mindestens ein Gestell, wobei das Gestell eine Transportebene definiert, in der das Bauteil transportierbar ist,
- eine Hebeeinrichtung, die dazu vorgesehen und eingerichtet ist, das Bauteil von der Transportebene in eine Entnahmeebene anzuheben, wobei die Hebeeinrichtung in einer vertikalen Richtung betrachtet zumindest teilweise unterhalb der Transportebene angeordnet ist,
wobei die Hebeeinrichtung mindestens eine erste Kontakteinheit mit einem ersten Kontaktelement und mindestens eine zweite Kontakteinheit mit einem zweiten Kontaktelement aufweist, wobei erstes und zweites Kontaktelement zum Kontaktieren mindestens eines Teilbereichs mindestens einer Bauteilunterseite vorgesehen und eingerichtet sind, wobei die erste Kontakteinheit und die zweite Kontakteinheit derart mechanisch miteinander verbunden sind, dass sie (immer) synchron miteinander anhebbar sind, wobei die zweite Kontakteinheit derart unabhängig von der ersten Kontakteinheit (automatisch) ansteuerbar ist, dass das erste Kontaktelement in eine erste Ebene und das zweite Kontaktelement in eine sich von der ersten Ebene unterscheidende zweite Ebene anhebbar ist.

Die vorgeschlagene Vorrichtung dient bevorzugt zum Transportieren mindestens eines in einem (Durchlauf-)Ofen, insbesondere Rollenherdofen, vorzugsweise zumindest in Teilbereichen auf Austenitisierungstemperatur aufgeheizten metallischen Bauteils beziehungsweise Stahlbauteils. Bevorzugt ist die Vorrichtung zum Transportieren mindestens eines metallischen Bauteils beziehungsweise Stahlbauteils, das zumindest in Teilbereichen eine Härte- oder Umformtemperatur und/oder eine Temperatur oberhalb der AC1- oder AC3-Tempereratur (bei Stahlbauteilen) aufweist, vorgesehen und eingerichtet. Die AC1-Temperatur ist die Temperatur, bei der die Bildung von Austenit bei einem Erwärmen beginnt. Die AC3-Temperatur liegt oberhalb der AC1-Temperatur und ist die Temperatur, bei der die Umwandlung des Ferrits in Austenit bei einem Erwärmvorgang endet. Besonders bevorzugt ist die Vorrichtung zum Transportieren mindestens eines metallischen Bauteils beziehungsweise Stahlbauteils, das zumindest in Teilbereichen eine Temperatur oberhalb von 700°C [Grad Celsius] oder sogar oberhalb von 840°C aufweist vorgesehen und eingerichtet.

Die vorgeschlagene Vorrichtung ist vorzugsweise einem (Durchlauf-)Ofen, insbesondere einem Rollenherdofen, zugeordnet, wobei die Vorrichtung insbesondere dazu vorgesehen und eingerichtet ist direkt an einem Ofenausgang des Ofens angeordnet und/oder angeschlossen zu werden. Vorzugsweise ist die Vorrichtung in einer Durchlaufrichtung und/oder Transportrichtung betrachtet (direkt) hinter einem Ofen, insbesondere Durchlaufofen, wie beispielsweise einem Rollenherdofen, anordenbar beziehungsweise angeordnet. In einer beispielhaften Warmumformlinie kann die hier vorgeschlagene Vorrichtung beispielswiese zwischen einem Ofen und einem Presshärtewerkzeug angeordnet sein. Bevorzugt ist die Vorrichtung dazu vorgesehen und eingerichtet mindestens zwei oder sogar mindestens vier (in der Transportrichtung betrachtet) nebeneinanderliegende Bauteile zu transportieren.

Bei dem mindestens einen Bauteil handelt es sich vorzugsweise um ein metallisches Bauteil, insbesondere um ein Stahlbauteil und/oder ein Aluminiumbauteil. Bevorzugt ist das Bauteil ein Blech, eine Platine, und/oder ein Halbzeug, das insbesondere zum Einstellen seiner Härte und/oder Festigkeit einem Wärmebehandlungsprozess unterzogen wird und/oder unterzogen wurde. Besonders bevorzugt handelt es sich bei dem Bauteil um ein Kraftfahrzeugbauteil, insbesondere um eine (A- oder B-)Säule, einen Seitenaufprallschutzträger (für eine Tür), einen Schweller, ein Rahmenteil, einen Stoßstangenfänger, einen Querträger (für Boden und/oder Dach), um einen (vorderen und/oder hinteren) Längsträger, oder um ein Halbzeug für ein (solches) Kraftfahrzeugbauteil.

Vorzugsweise ist das Bauteil an zumindest seiner Oberseite und/oder seiner Unterseite mit einer Beschichtung (vor-)beschichtet, die insbesondere zur Vermeidung von Verzunderung vorgesehen und eingerichtet ist. Bevorzugt ist die Beschichtung mit Zink, Aluminium und/oder Silizium gebildet. Bevorzugt handelt es sich bei der Beschichtung um eine Zink-Beschichtung oder eine Aluminium-Silizium-Beschichtung.

Die Hebeeinrichtung, ist dazu vorgesehen und eingerichtet, das Bauteil von der Transportebene in eine Entnahmeebene anzuheben. Die Entnahmeebene ist in der vertikalen Richtung betrachtet oberhalb der Transportebene angeordnet und insbesondere parallel zu der Transportebene ausgerichtet. Bevorzugt liegt ein insbesondere vorbestimmter (konstanter) Abstand zwischen Transportebene und Entnahmeebene im Bereich von 50 mm bis 1000 mm [Millimeter], besonders bevorzugt im Bereich von 100 mm bis 600 mm. Aus der Entnahmeebene kann das Bauteil beispielhaft mittels eines (automatischen) Greifers entnommen und beispielsweise in eine der Vorrichtung nachgeordnete Formgebungsvorrichtung, wie z. B. ein Presshärtewerkzeug, verbracht werden.

Ferner ist die Hebeeinrichtung in einer vertikalen Richtung betrachtet zumindest teilweise, bevorzugt (nahezu) vollständig unterhalb der Transportebene angeordnet. Vorzugsweise ist die Hebeeinrichtung vollständig unterhalb der Entnahmeebene angeordnet. Bevorzugt ist die Hebeeinrichtung in dem Gestell gehalten. Besonders bevorzugt beträgt ein sich insbesondere über eine Gestell-Seite hinaus erstreckender seitlicher Überstand der Hebeeinrichtung höchstens 1500 mm.

Die Hebeeinrichtung weist mindestens eine erste Kontakteinheit mit einem ersten Kontaktelement und mindestens eine zweite Kontakteinheit mit einem zweiten Kontaktelement auf. Bevorzugt weist die Hebeeinrichtung mindestens zwei erste Kontakteinheiten und/oder mindestens zwei zweite Kontakteinheiten auf. Weiter bevorzugt weist jede erste Kontakteinheit ein erstes Kontaktelement und/oder jede zweite Kontakteinheit ein zweites Kontaktelement auf.

Jedes Kontaktelement im Rahmen des vorliegenden Dokumentes ist zum Kontaktieren mindestens eines Teilbereichs mindestens einer Bauteilunterseite vorgesehen und eingerichtet. Die Kontaktelemente sind vorzugsweise jeweils in der Art einer Platte, beispielsweise mit einem (Aluminium- oder Stahl-)Blech oder in der Art eines oder mehrerer Stifte gebildet. Vorzugsweise sind die Kontaktelemente in der Vorrichtung jeweils derart ausgerichtet, dass eine Kante beziehungsweise eine Schmalseite oder ein Stiftende der Kontaktelemente nahezu vertikal nach oben zeigt. Ein solches Kontaktelement kann auch als "Schwert" bezeichnet werden. Bevorzugt ist jedes Kontaktelement dazu vorgesehen und eingerichtet, eine thermische Beeinflussung des kontaktierten Bauteils möglichst gering zu halten. Bevorzugt weisen die Kontaktelemente jeweils eine gezackte, gewellte oder punktförmige Kontaktoberfläche auf. Die Kontaktoberfläche ist regelmäßig an einer hin zu der Transportebene und/oder einer nach oben ausgerichteten Schmalseite der Kontaktelemente gebildet.

Bevorzugt weist jedes Kontaktelemente eine Kontaktelement-Dicke im Bereich von 1 mm bis 25 mm, insbesondere im Bereich von 2 mm bis 15 mm, auf. Unter der Kontaktelement-Dicke wird insbesondere die Ausdehnung des Kontaktelements in der Transportrichtung verstanden. Weiter bevorzugt weist jedes Kontaktelement eine Kontaktelement-Länge im Bereich von 100 mm bis 1500 mm, insbesondere im Bereich von 200 mm bis 1200 mm, auf. Unter der Kontaktelement-Länge wird insbesondere die Ausdehnung des Kontaktelements quer zu der Transportrichtung und parallel zu der Transportebene verstanden.

Die erste Kontakteinheit und die zweite Kontakteinheit sind derart mechanisch miteinander verbunden, dass sie (immer) synchron miteinander anhebbar sind beziehungsweise angehoben werden. Bevorzugt sind die erste Kontakteinheit und die zweite Kontakteinheit derart mechanisch miteinander verbunden beziehungsweise gekoppelt, dass insbesondere während eines Anhebens eines Bauteils eine Relativbewegung zwischen der ersten Kontakteinheit und der zweiten Kontakteinheit verhindert beziehungsweise blockiert wird. Bevorzugt sind die erste Kontakteinheit und die zweite Kontakteinheit über einen (starren) Rahmen, Träger und/oder Balken miteinander verbunden beziehungsweise gekoppelt.

Die synchron mit der ersten Kontakteinheit anhebbare zweite Kontakteinheit ist (zudem) derart unabhängig von der ersten Kontakteinheit (automatisch) ansteuerbar, dass das erste Kontaktelement in eine erste Ebene und das zweite Kontaktelement in eine zweite Ebene anhebbar ist beziehungsweise angehoben wird. Hierbei unterscheiden sich die erste Ebene und die zweite Ebene voneinander. Bevorzugt ist die erste Ebene die Entnahmeebene oder liegt dicht unterhalb der Entnahmeebene. Weiter bevorzugt liegt die zweite Ebene in oder unterhalb der Transportebene. Üblicherweise liegt die zweite Ebene (in der vertikalen Richtung betrachtet) immer unterhalb der ersten Ebene. Bevorzugt ist/sind die zweite Kontakteinheit und/oder die erste Kontakteinheit insbesondere automatisch in Abhängigkeit einer Bauteilgeometrie des anzuhebenden Bauteils ansteuerbar. Vorzugsweise ist die zweite Kontakteinheit, insbesondere in Abhängigkeit einer Bauteilgeometrie des anzuhebenden Bauteils, unabhängig von der ersten Kontakteinheit (automatisch) einfahrbar, einziehbar und/oder komprimierbar.

Bevorzugt weist die Vorrichtung eine Steuereinrichtung auf. Die Steuereinrichtung weist insbesondere eine Prozessoreinheit und eine Speichereinheit auf. Die Steuereinrichtung ist bevorzugt dazu vorgesehen und eingerichtet die Kontakteinheiten der Hebeeinrichtung in Abhängigkeit von Bauteildaten des anzuhebenden Bauteils unabhängig voneinander anzusteuern.

Bevorzugt umfasst die Vorrichtung und/oder hat das Gestell weiterhin mindestens zwei, insbesondere mindestens sechs oder sogar mehr als zwölf Transportrollen, die üblicherweise eine Rollenbahn bilden, wobei die Transportrollen in dem Gestell drehbar gehalten sind und wobei die Transportrollen beziehungsweise die Rollenbahn die Transportebene definieren beziehungsweise definiert und/oder aufspannen beziehungsweise aufspannt. Bevorzugt weist die Vorrichtung mindestens sechs (6), besonders bevorzugt mindestens zwölf (12) Transportrollen oder sogar mindestens vierundzwanzig (24) Transportrollen auf. Weiter bevorzugt sind die Transportrollen in mindestens zwei Reihen angeordneten, wobei die Reihen in Transportrichtung betrachtet nebeneinander angeordnet sind und sich entlang der Transportrichtung erstrecken.

Vorzugsweise sind die Transportrollen metallisch oder keramisch gebildet. Besonders bevorzugt sind die Transportrollen mit oder aus Stahl gebildet. Weiter bevorzugt ist zumindest eine Außenoberfläche und/oder Mantelfläche jeder Transportrolle mit einer (Zink-)Beschichtung versehen.

Nach einer vorteilhaften Ausgestaltung wird vorgeschlagen, dass das erste Kontaktelement und das zweite Kontaktelement, in einer Transportrichtung betrachtet, jeweils zwischen zwei benachbarten Transportrollen angeordnet sind. Hierbei ist es jedoch möglich, dass das oder die (in oder entgegen der Transportrichtung betrachtet) letzte(n) Kontaktelement(e) hinter der oder den letzten Transportrolle(n) angeordnet sind.

Nach einer vorteilhaften Ausgestaltung wird vorgeschlagen, dass die erste Kontakteinheit und die zweite Kontakteinheit von einem gemeinsamen Rahmen gehalten sind. Hierbei sind die erste Kontakteinheit und die zweite Kontakteinheit beispielsweise mittels des Rahmens mechanisch miteinander verbunden. Weiter bevorzugt weist die Hebevorrichtung mindestens zwei Rahmen auf, wobei jeder Rahmen mindestens eine erste Kontakteinheit und mindestens eine zweite Kontakteinheit hält. Wenn zwei oder mehr Rahmen vorgesehen sind, so können diese in der Transportrichtung betrachtet nebeneinander angeordnet und/oder unabhängig voneinander anhebbar sein. Insbesondere ist der Rahmen beziehungsweise sind die Rahmen innerhalb des Gestells angeordnet.

Nach einer weiteren vorteilhaften Ausgestaltung wird vorgeschlagen, dass der Rahmen mittels eines Haupt-Hubwerkzeugs der Hebeeinrichtung anhebbar ist beziehungsweise angehoben wird. Vorzugsweise ist der Rahmen mittels des Haupt-Hubwerkzeugs servomotorisch, servopneumatisch und/oder hydraulisch anhebbar. Wenn zwei oder mehr Rahmen vorgesehen sind, so können diese mittels separater Haupt-Hubwerkzeuge oder mittels eines gemeinsamen Haupt-Hubwerkzeugs angehoben werden. Vorzugsweise ist das Haupt-Hubwerkzeug mit mindestens einem elektromechanischen, hydraulischen oder pneumatischen Linearabtrieb gebildet. Bevorzugt weist das Haupt-Hubwerkzeug mindestens einen (elektromotorischen) Spindelantrieb, mindestens einen Hydraulikzylinder, mindestens einen Pneumatikzylinder, mindestens einen Seilzug und/oder mindestens einen Kettenzug auf.

Nach einer vorteilhaften Ausgestaltung wird vorgeschlagen, dass jede zweite Kontakteinheit ein (separat) ansteuerbares Hubwerkzeug aufweist, das mit dem zweiten Kontaktelement der zweiten Kontakteinheit verbunden ist. Vorzugsweise ist das Hubwerkzeug mit dem Rahmen (fest) verbunden und/oder an dem Rahmen abgestützt. Bevorzugt ist das Hubwerkzeug zum Einstellen eines (vorbestimmten) zweiten Abstands zwischen dem zweiten Kontaktelement und dem Rahmen vorgesehen und eingerichtet, wobei der zweite Abstand besonders bevorzugt kleiner ist als ein erster Abstand zwischen dem ersten Kontaktelement und dem Rahmen. Insbesondere ist der zweite Abstand derart vorbestimmt, dass bei einem Anheben des Rahmens und/oder der zweiten Kontakteinheit, das zweite Kontaktelement die Transportebene nicht durchdringt und/oder keine Bauteilunterseite erreicht. Der zweite Abstand kann als (kürzester) Abstand zwischen der Kontaktoberfläche des zweiten Kontaktelements und des Rahmens verstanden werden.

Weiter bevorzugt hat jede erste Kontakteinheit ein (separat) ansteuerbares Hubwerkzeug, das mit dem ersten Kontaktelement der ersten Kontakteinheit verbunden ist. Vorzugsweise ist das Hubwerkzeug mit dem Rahmen (fest) verbunden und/oder an dem Rahmen abgestützt. Bevorzugt ist das Hubwerkzeug zum Einstellen eines (vorbestimmten) ersten Abstands zwischen dem ersten Kontaktelement und dem Rahmen vorgesehen und eingerichtet, wobei der erste Abstand insbesondere derart (vor-)bestimmt ist, dass bei einem Anheben des Rahmens und/oder der ersten Kontakteinheit das erste Kontaktelement die Transportebene durchdringt und/oder das Bauteil (das erste Kontaktelement kontaktierend) von der Transportebene in die Entnahmeebene gehoben wird. Der erste Abstand kann als (kürzester) Abstand zwischen der Kontaktoberfläche des ersten Kontaktelements und des Rahmens verstanden werden.

Bevorzugt weist die Hebeeinrichtung mindestens ein drittes Kontaktelement auf, das zum Kontaktieren mindestens eines Teilbereichs mindestens einer Bauteilunterseite vorgesehen und eingerichtet ist. Bevorzugt ist das dritte Kontaktelement (immer) in die erste Ebene anhebbar. Besonders bevorzugt ist das dritte Kontaktelement nicht ansteuerbar. Vorzugsweise ist das dritte Kontaktelement mit einer festen beziehungsweise (vor-)bestimmten Relativlage zu dem Rahmen an dem Rahmen (lösbar) fixierbar. Das dritte Kontaktelement kann auf den Rahmen aufgesteckt sein. Besonders bevorzugt ist das dritte Kontaktelement mit einem festen beziehungsweise (vor-)bestimmten dritten Abstand an dem Rahmen gehalten, wobei der dritte Abstand insbesondere derart (vor-)bestimmt ist, dass bei einem Anheben des Rahmens das dritte Kontaktelement die Transportebene durchdringt und/oder das Bauteil (das dritte Kontaktelement kontaktierend) von der Transportebene in die Entnahmeebene gehoben wird. Der dritte Abstand kann als (kürzester) Abstand zwischen der Kontaktoberfläche des dritten Kontaktelements und des Rahmens verstanden werden.

Die ersten und zweiten Kontakteinheiten können gemeinsam mit den dritten Kontaktelementen insbesondere auf einem oder mehreren Rahmen der Hebeeinrichtung in der Art einer Matrix oder eines Feldes angeordnet sein. Beispielsweise können die ersten und zweiten Kontakteinheiten gemeinsam mit den dritten Kontaktelementen in mindestens zwei oder sogar mindestens vier Reihen angeordnet sein, wobei sich die Reihen jeweils in der Transportrichtung erstrecken und (in der Transportrichtung betrachtet) nebeneinander angeordnet sind. Vorzugsweise weist die Hebeeinrichtung mindestens eine Anordnung, zumindest umfassend eine Vielzahl erster Kontakteinheiten, eine Vielzahl zweiter Kontakteinheiten und eine Vielzahl dritter Kontaktelemente auf. Die Anordnung weist insbesondere in der Transportrichtung aufeinanderfolgend mindestens eine zweite Kontakteinheit, mindestens eine erste Kontakteinheit, mindestens zwei dritte Kontaktelemente, mindestens eine erste Kontakteinheit und mindestens eine zweite Kontakteinheit auf. Dies bedeutet mit anderen Worten insbesondere, dass (in der Transportrichtung betrachtet) die zweiten Kontakteinheiten außerhalb und/oder benachbart der ersten Kontakteinheiten und die ersten Kontakteinheiten außerhalb und/oder benachbart der dritten Kontaktelemente angeordnet sind. Die Anordnung kann eine insbesondere entlang der Transportrichtung ausgerichtete Reihe von vorzugsweise auf dem Rahmen angeordneten Kontakteinheiten und Kontaktelementen bilden. Bevorzugt sind mindestens zwei oder sogar mindestens vier Anordnungen (in der Transportrichtung betrachtet) nebeneinander insbesondere auf dem Rahmen angeordnet. Die Anordnung kann weitere, insbesondere außerhalb und/oder benachbart der zweiten Kontakteinheiten angeordnete Kontakteinheiten aufweisen, die unabhängig von der ersten Kontakteinheit und/oder unabhängig von der zweiten Kontakteinheit und/oder unabhängig voneinander (automatisch) ansteuerbar sind.

Die Vorrichtung kann weiterhin eine Positioniereinrichtung aufweisen, wobei die Positioniereinrichtung mindestens einen bewegbaren und in mindestens einer (vor-)bestimmten Position fixierbaren Anschlag und/oder eine Vielzahl von Ausrichtfingern umfassen kann. Die Ausrichtfinger können quer zu der Transportrichtung in der Transportebene bewegt werden. Der Anschlag dient insbesondere zur Vorgabe einer Anschlagposition der Bauteile in der Transportrichtung und/oder in der Transportebene. Die Ausrichtfinger dienen insbesondere zur Ausrichtung des Bauteils in der und/oder quer zur Transportrichtung und/oder in der Transportebene, insbesondere falls das Bauteil im Vergleich zur Transportrichtung gedreht und/oder seitlich versetzt einen vorgeschalteten Ofen verlässt.

Nach einem weiteren Aspekt wird ein Verfahren zum Transportieren mindestens eines aufgeheizten Bauteils vorgeschlagen, wobei das Verfahren zumindest die folgenden Schritte umfasst:
a) Transportieren des Bauteils in einer Transportebene, bis das Bauteil eine Anschlagposition erreicht,
b) automatisches Anpassen einer Hebeeinrichtung in Abhängigkeit einer Geometrie des Bauteils, wobei die Hebeeinrichtung in einer vertikalen Richtung betrachtet zumindest teilweise, insbesondere (nahezu) vollständig, unterhalb der Transportebene angeordnet ist,
c) Anheben des Bauteils von der Transportebene in eine Entnahmeebene mittels der Hebeeinrichtung.

Erfindungsgemäß wird das Verfahren mit einer hier vorgestellten Vorrichtung durchgeführt. Die angedeutete Reihenfolge der Verfahrensschritte a), b) und c) ergibt sich bei einem regulären Ablauf des Verfahrens. Einzelne oder alle Verfahrensschritte, insbesondere die Schritte a) und b) sowie gegebenenfalls die Schritte b) und c), können zeitgleich, nacheinander und/oder zumindest teilweise parallel durchgeführt werden. Insbesondere wenn die Lage des Bauteils in der Anschlagposition vorbestimmbar ist, kann Schritt b) vor Schritt a) durchgeführt werden. Insbesondere wenn eine Vielzahl von gleichartigen Bauteilen transportiert werden soll, können die Schritte a) und c) häufiger durchgeführt werden als Schritt b).

Weiterhin bevorzugt erfolgt zwischen den Schritten a) und b) ein Positionieren des mindestens einen Bauteils. Besonders bevorzugt erfolgt das Positionieren mittels einer Mehrzahl von Ausrichtfingern, die vorzugsweise in der Transportebene und/oder quer zur Transportrichtung verfahren werden.

Nach einer vorteilhaften Ausgestaltung wird vorgeschlagen, dass das automatische Anpassen in Schritt b) durch ein gezieltes Ansteuern zumindest einer ersten Kontakteinheit und/oder zumindest einer zweiten Kontakteinheit erfolgt. Bevorzugt wird mindestens eine zweite Kontakteinheit der Hebeeinrichtung unabhängig von einer ersten Kontakteinheit der Hebeeinrichtung angesteuert. Bevorzugt werden die Kontakteinheiten, deren Kontaktelemente von dem anzuhebenden Bauteil nicht, insbesondere nicht mit einem (sich in beziehungsweise entgegen der Transportrichtung erstreckenden) Überstand von mindestens 100 mm, überspannt werden derart angesteuert, dass diese Kontakteinheiten komprimiert werden und/oder die Kontaktelemente dieser Kontakteinheiten eingefahren beziehungsweise eingezogen werden.

Bevorzugt erfolgt das Anheben des Bauteils in Schritt c) durch ein synchrones Anheben der mindestens einen ersten Kontakteinheit und der mindestens einen zweiten Kontakteinheit der Hebeeinrichtung. Besonders bevorzugt wird ein erstes Kontaktelement der ersten Kontakteinheit in eine erste Ebene und ein zweites Kontaktelement der zweiten Kontakteinheit in eine sich von der ersten Ebene unterscheidende zweite Ebene angehoben wird.

Die im Zusammenhang mit der Vorrichtung erörterten Details, Merkmale und vorteilhaften Ausgestaltungen können entsprechend auch bei dem hier vorgestellten Verfahren auftreten und umgekehrt. Insoweit wird auf die dortigen Ausführungen zur näheren Charakterisierung der Merkmale vollumfänglich Bezug genommen.

Nach einem weiteren Aspekt wird eine Verwendung einer hier vorgestellten Vorrichtung zum Transportieren mindestens eines aufgeheizten Bauteils vorgeschlagen. Bevorzugt wird die Vorrichtung zum Transportieren mindestens eines in einem (Durchlauf-)Ofen, insbesondere Rollenherdofen, vorzugsweise zumindest in Teilbereichen auf Austenitisierungstemperatur aufgeheizten metallischen Bauteils beziehungsweise Stahlbauteils verwendet. Bevorzugt wird die Vorrichtung zum Transportieren mindestens eines metallischen Bauteils beziehungsweise Stahlbauteils, das zumindest in Teilbereichen eine Härte- oder Umformtemperatur und/oder eine Temperatur oberhalb der AC1- oder AC3-Tempereratur (bei Stahlbauteilen) aufweist verwendet. Weiter bevorzugt werden in der Transportebene der Vorrichtung parallel beziehungsweise gleichzeitig mindestens zwei oder sogar mindestens vier Bauteile transportiert.

Die im Zusammenhang mit der Vorrichtung und/oder dem Verfahren erörterten Details, Merkmale und vorteilhaften Ausgestaltungen können entsprechend auch bei der hier vorgestellten Verwendung auftreten und umgekehrt. Insoweit wird auf die dortigen Ausführungen zur näheren Charakterisierung der Merkmale vollumfänglich Bezug genommen.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen:
- Fig. 1:: schematisch eine Seitenansicht einer erfindungsgemäßen Vorrichtung,
- Fig. 2:: schematisch eine weitere Seitenansicht der Vorrichtung aus Fig. 1,
- Fig. 3:: schematisch eine Seitenansicht einer weiteren erfindungsgemäßen Vorrichtung,
- Fig. 4:: schematisch eine Draufsicht der Vorrichtung aus Fig. 3,
- Fig. 5:: eine Seitenansicht einer erfindungsgemäßen Vorrichtung, und
- Fig. 6:: eine Vorderansicht der Vorrichtung aus Fig. 5.

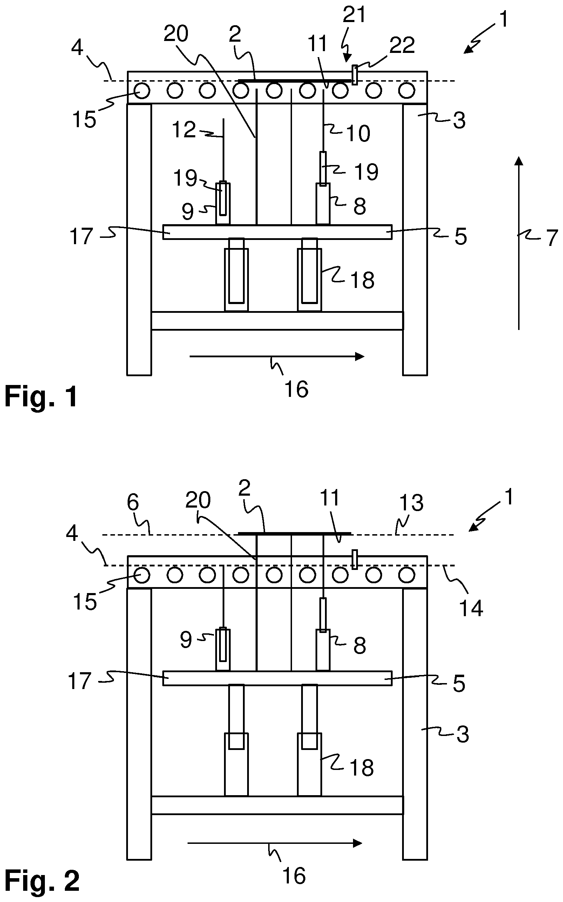

Fig. 1 zeigt schematisch eine Seitenansicht einer erfindungsgemäßen Vorrichtung 1. Die Vorrichtung 1 ist zum Transportieren mindestens eines aufgeheizten Bauteils 2 vorgesehen und eingerichtet. Gemäß der Darstellung nach Fig. 1 ist ein Bauteil 2 erkennbar, dass hier beispielhaft als Stahlbauteil ausgeführt ist. Die Vorrichtung weist ein Gestell 3 auf, das eine Transportebene 4 definiert, in der das Bauteil 2 transportierbar ist. Die Transportebene 4 ist hier beispielhaft mittels neun Transportrollen 15 definiert, die in dem Gestell 3 drehbar gehalten sind.

Zudem weist die Vorrichtung 1 eine Hebeeinrichtung 5 auf, die dazu vorgesehen und eingerichtet ist, das Bauteil 2 von den Transportrollen 15 abzuheben und von der Transportebene 4 in eine Entnahmeebene (hier nicht dargestellt) anzuheben. In Fig. 1 ist erkennbar, dass die Hebeeinrichtung 5 in einer vertikalen Richtung 7 betrachtet unterhalb der Transportebene 4 angeordnet ist. Die Hebeeinrichtung 5 weist mindestens eine erste Kontakteinheit 8 mit einem ersten Kontaktelement 10 und mindestens eine zweite Kontakteinheit 9 mit einem zweiten Kontaktelement 12 auf. Das erste Kontaktelement 10 und das zweite Kontaktelement 12 sind zum Kontaktieren mindestens eines Teilbereichs einer Bauteilunterseite 11 vorgesehen und eingerichtet. Zudem sind das erste Kontaktelement 8 und das zweite Kontaktelement 12 hier beispielhaft, in einer Transportrichtung 16 betrachtet, jeweils zwischen zwei benachbarten Transportrollen 15 angeordnet.

Die erste Kontakteinheit 8 und die zweite Kontakteinheit 9 sind derart mechanisch miteinander verbunden sind, dass sie synchron miteinander anhebbar sind, obwohl die zweite Kontakteinheit 9 unabhängig von der ersten Kontakteinheit 8 ansteuerbar ist. Gemäß der Darstellung nach Fig. 1 sind die erste Kontakteinheit 8 und die zweite Kontakteinheit 9 beispielhaft von einem gemeinsamen Rahmen 17 gehalten und mittels des Rahmens 17 mechanisch miteinander verbunden. In Fig. 1 ist zudem gezeigt, dass der Rahmen 17 mittels eines Haupt-Hubwerkzeugs 18 der Hebeeinrichtung 5 anhebbar ist. Das Haupt-Hubwerkzeug 18 ist hier beispielhaft mit zwei Hydraulikzylindern gebildet.

In Fig. 1 ist zudem gezeigt, dass die erste Kontakteinheit 8 und die zweite Kontakteinheit 9 jeweils ein ansteuerbares Hubwerkzeug 19 aufweisen, wobei das Hubwerkzeug 19 der ersten Kontakteinheit 8 mit dem ersten Kontaktelement 10 und das Hubwerkzeug 19 der zweiten Kontakteinheit 9 mit dem zweiten Kontaktelement 12 verbunden ist. Das Hubwerkzeug 19 ist hier beispielhaft jeweils mit einem Pneumatikzylinder gebildet. Demnach sind die erste Kontakteinheit 8 und die zweite Kontakteinheit 9 hier jeweils pneumatisch ansteuerbar. Eine pneumatische Ansteuerung der Kontakteinheiten weist insbesondere den Vorteil auf, dass gegebenenfalls auftretende Hitzeschäden, die an den Ansteuerleitungen der Kontakteinheiten aufgrund der hohen Temperaturen der transportierten Bauteile auftreten können, nicht zu einem elektrischen Kurzschluss und/oder Austreten gegebenenfalls brennbarer Flüssigkeiten führen, sondern lediglich zu einem Austreten von Druckluft.

Zudem weist die Hebevorrichtung hier beispielhaft zwei dritte Kontaktelemente 20 auf, die jeweils zum Kontaktieren mindestens eines Teilbereichs der Bauteilunterseite 11 vorgesehen und eingerichtet sind. Die dritten Kontaktelemente 20 sind nicht ansteuerbar und sind mit einer festen Relativlage zu dem Rahmen 17 an dem Rahmen 17 befestigt.

Das in Fig. 1 gezeigte Bauteil 2 wird über die Rollen 15 entlang der Transportrichtung 16 in der Transportebene 4 transportiert, bis das Bauteil 2 eine Anschlagposition 21 erreicht, die mittels eines bewegbaren und in mindestens einer vorbestimmten Position fixierbaren Anschlags 22 vorbestimmt ist. Bevor das Bauteil 2 angehoben wird, erfolgt ein automatisches Anpassen der Hebeeinrichtung 5 in Abhängigkeit einer Geometrie des Bauteils 2. Bei dem Bauteil 2 handelt es sich regelmäßig um ein dünnwandiges, längliches Stahlbauteil, wobei sich zum einen dessen Form während des Anhebens nicht verändern sollte, beispielsweise durch ein Verbiegen, und zum anderen eine Kontaktfläche zwischen Hebeeinrichtung 5 und Bauteil 2 derart klein sein sollte, dass die Temperatur des Bauteils durch die Hebeeinrichtung 5 möglichst wenig beeinflusst wird.

Um eine ungewünschte Wölbung des Bauteils 2 während des Anhebens zu vermeiden, sollte ein (sich in beziehungsweise entgegen der Transportrichtung 16 erstreckender) Überstand des Bauteils 2 über ein (äußeres) Kontaktelement möglichst gering sein. Jedoch sollte der Überstand ausreichend groß sein, damit ein Greifer (hier nicht dargestellt) zumindest teilweise auch unter das Bauteil 2 greifen kann. Um zudem das Anfahren des Greifers an das Bauteil 2 nicht zu behindern, sind bevorzugt (in der Transportrichtung 16 betrachtet) vor oder hinter dem Bauteil 2 die Kontakteinheiten 8, 9 derart ausgestaltet beziehungsweise angepasst, dass (möglichst) keine Kontaktelemente in den Weg des Greifers hineinragen.

Um zum einen ein Anheben des Bauteils 2 zu ermöglichen, das den vorgenannten Anforderungen gerecht werden kann und zum anderen ein zeitaufwändiges Umrüsten der Vorrichtung 2 zu vermeiden, ist die Hebeeinrichtung 5 automatisch an das anzuhebende Bauteil 2 anpassbar. Hierzu wird gemäß der Darstellung nach Fig. 1 die zweite Kontakteinheit 9, deren zweites Kontaktelement 12 von dem anzuhebenden Bauteil 2 nicht überspannt wird derart gezielt (pneumatisch) angesteuert, dass die zweite Kontakteinheit 9 komprimiert wird. Das Komprimieren der zweiten Kontakteinheit 9 erfolgt hier beispielhaft dadurch, dass das zweite Kontaktelement 12 pneumatisch eingefahren beziehungsweise eingezogen wird.

In Fig. 2 ist eine Situation veranschaulicht, in der das Bauteil 2 mittels der Hebeeinrichtung 5 von der Transportebene 4 in eine Entnahmeebene 6 gehoben wurde. Wenn das Bauteil 2 sich in der Entnahmeebene 6 befindet, kann ein Greifer (hier nicht dargestellt) das Bauteil 2 ungehindert anfahren und aus der Vorrichtung 1 entnehmen. In Fig. 2 ist erkennbar, dass das zweite Kontaktelement 12, das aufgrund der Geometrie des Bauteils 2 keinen Beitrag zum Anheben des Bauteils 2 leisten kann, derart eingefahren ist, dass das zweite Kontaktelement 12 zwar synchron mit dem ersten Kontaktelement 8 und den dritten Kontaktelementen 20 angehoben wird, die Transportebene 4 jedoch nicht (vollständig) durchdringt und einem Greifer (hier nicht dargestellt) den Weg hin zu der Bauteilunterseite 11 nicht blockiert.

Darüber hinaus ist in Fig. 2 zu erkennen, dass die erste Kontakteinheit 8 und die zweite Kontakteinheit 9 derart mechanisch miteinander verbunden sind, dass sie (immer) synchron miteinander angehoben werden, wobei die zweite Kontakteinheit 9 derart unabhängig von der ersten Kontakteinheit 8 (automatisch) ansteuerbar ist, dass das erste Kontaktelement 10 in eine erste Ebene 13 und das zweite Kontaktelement 12 in eine sich von der ersten Ebene 13 unterscheidende zweite Ebene 14 angehoben wird. Die erste Ebene 13 liegt hier beispielhaft derart dicht unterhalb der Entnahmeebne 6, dass die erste Ebene 13 und die Entnahmeebne 6 hier der Übersichtlichkeit halber mit derselben gestrichelten Linie angedeutet sind. Die zweite Ebene 14 liegt hier beispielhaft derart dicht unterhalb der Transportebene 14, dass die zweite Ebene 14 und die Transportebene 14 hier der Übersichtlichkeit halber mit derselben gestrichelten Linie angedeutet sind. Zudem ist in Fig. 2 veranschaulicht, dass die dritten Kontaktelemente 20 (immer) in die erste Ebene 13 angehoben werden.

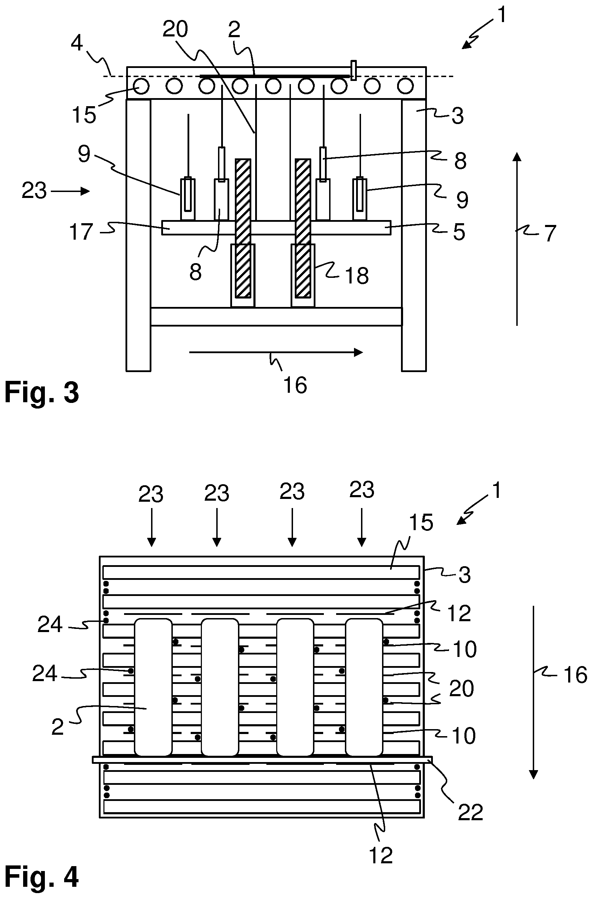

Fig. 3 zeigt schematisch eine Seitenansicht einer erfindungsgemäßen Vorrichtung 1. Da die Bezugszeichen hier einheitlich verwendet werden, wird nachfolgend lediglich auf die Unterschiede zu der vorstehend beschriebenen Vorrichtung eingegangen. Das Haupt-Hubwerkzeug 18 ist gemäß der Darstellung nach Fig. 3 lediglich beispielhaft mit zwei (elektromotorischen) Spindelantrieben gebildet. Die Hebeeinrichtung 5 weist hier vier Anordnungen 23, jeweils umfassend zwei erste Kontakteinheiten 8, zwei zweite Kontakteinheiten 9 und zwei dritte Kontaktelemente 20 auf. In Fig. 3 ist der Blick seitlich auf eine der Anordnungen 23 gerichtet, wobei die Anordnung 23 in der Transportrichtung 16 aufeinanderfolgend eine zweite Kontakteinheit 9, eine erste Kontakteinheit 8, zwei dritte Kontaktelemente 20, eine erste Kontakteinheit 8 und eine zweite Kontakteinheit 9 aufweist. Gemäß der Darstellung nach Fig. 3 sind die zweiten Kontakteinheiten 9 außerhalb und benachbart der ersten Kontakteinheiten 8 und die ersten Kontakteinheiten 8 außerhalb und benachbart der dritten Kontaktelemente 20 angeordnet. Die Anordnung 23 bildet hier eine entlang der Transportrichtung 16 ausgerichtete Reihe von auf dem Rahmen 17 angeordneten ersten und zweiten Kontakteinheiten 8, 9 sowie dritten Kontaktelementen 20. Dass die ersten und zweiten Kontakteinheiten 8, 9 sowie dritten Kontaktelemente 20 hier beispielhaft mittels des Rahmens 17 mechanisch miteinander verbunden sind, ermöglicht in vorteilhafter Weise, dass alle ersten, zweiten und dritten Kontaktelemente 10, 12 und 20 synchron miteinander angehoben werden, so dass das auf der Anordnung 20 während des Anhebens aufliegende Bauteil 2 möglichst gleichmäßig angehoben wird. Dass zudem die zweiten Kontakteinheiten 9 unabhängig von den ersten Kontakteinheiten 8 ansteuerbar sind, ermöglicht in vorteilhafter Weise, dass die Anordnung 20 ohne ein zeitaufwändiges manuelles Umrüsten der Vorrichtung 1 an eine Vielzahl unterschiedlicher Bauteile angepasst werden kann.

Fig. 4 zeigt schematisch eine Draufsicht der Vorrichtung 1 aus Fig. 3. Es ist zu erkennen, dass vier Anordnungen 23 von ersten und zweiten Kontakteinheiten 8, 9 sowie dritten Kontaktelementen 20 (in der Transportrichtung 16 betrachtet) nebeneinander angeordnet sind. Zudem sind in Fig. 4 Ausrichtfinger 24 gezeigt, die quer zu der Transportrichtung 16 bewegt werden können, um die vier Bauteile 2 in Bezug auf die vier Anordnungen 23 auszurichten. Wenn die auf den Transportrollen 15 transportierten Bauteile 2 an dem Anschlag 22 angekommen sind, werden diese zunächst mittels der Ausrichtfinger 24 ausgerichtet, bevor sie angehoben werden.

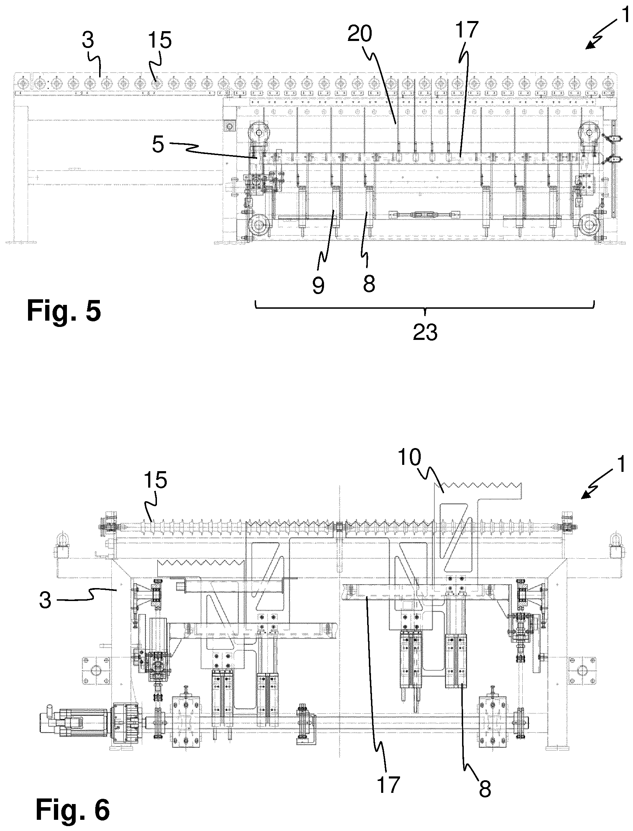

Fig. 5 zeigt eine Seitenansicht einer erfindungsgemäßen Vorrichtung 1. Da die Bezugszeichen hier einheitlich verwendet werden, wird nachfolgend lediglich auf die Unterschiede zu den vorstehend beschriebenen Vorrichtungen eingegangen. Die Hebeeinrichtung 5 weist hier vier Anordnungen 23, jeweils umfassend eine erste Kontakteinheit 8, eine zweite Kontakteinheiten 9, vier dritte Kontaktelemente 20 und sechs weitere Kontakteinheiten auf. Alle Kontakteinheiten sind hier unabhängig voneinander (automatisch und/oder pneumatisch) ansteuerbar und befinden sich gemäß der Darstellung nach Fig. 5 jeweils in einem komprimierten Zustand. Zudem sind alle Kontakteinheiten und die dritten Kontaktelemente mit dem Rahmen 17 verbunden und synchron miteinander anhebbar.

In Fig. 6 ist eine Vorderansicht der Vorrichtung aus Fig. 5 gezeigt. Es ist zu erkennen, dass die vier Anordnungen 23 nebeneinander angeordnet sind. Der Rahmen 17 ist hier in der Mitte (gedanklich) geschnitten, so dass die Hebeeinrichtung 5 auf der rechten Seite der Fig. 6 in einem angehobenen und auf der linken Seite der Fig. 6 in einem abgesenkten Zustand gezeigt werden kann.

Die Vorrichtung und das Verfahren zum Transportieren mindestens eines aufgeheizten Bauteils sowie die Verwendung der Vorrichtung zum Transportieren mindestens eines aufgeheizten Bauteils lösen die mit Bezug auf den Stand der Technik geschilderten Probleme zumindest teilweise. Insbesondere ermöglichen die Vorrichtung, das Verfahren und die Verwendung ein bauteilindividuelles Transportieren mit möglichst kurzen Umrüstzeiten. Zudem kann die Vorrichtung bei hohen Temperaturen eingesetzt werden.

## Patentansprüche

1. Vorrichtung (1) zum Transportieren mindestens eines aufgeheizten Bauteils (2), wobei die Vorrichtung (1) zumindest die folgenden Komponenten umfasst:
- mindestens ein Gestell (3), wobei das Gestell (3) eine Transportebene (4) definiert, in der das Bauteil (2) transportierbar ist,
- eine Hebeeinrichtung (5), die dazu vorgesehen und eingerichtet ist, das Bauteil (2) von der Transportebene (4) in eine Entnahmeebene (6) anzuheben, wobei die Hebeeinrichtung (5) in einer vertikalen Richtung (7) betrachtet zumindest teilweise unterhalb der Transportebene (4) angeordnet ist,
wobei die Hebeeinrichtung (5) mindestens eine erste Kontakteinheit (8) mit einem ersten Kontaktelement (10) und mindestens eine zweite Kontakteinheit (9) mit einem zweiten Kontaktelement (12) aufweist, wobei erstes und zweites Kontaktelement (12) zum Kontaktieren mindestens eines Teilbereichs mindestens einer Bauteilunterseite (11) vorgesehen und eingerichtet sind, wobei die erste Kontakteinheit (8) und die zweite Kontakteinheit (9) derart mechanisch miteinander verbunden sind, dass sie synchron miteinander anhebbar sind, wobei die zweite Kontakteinheit (9) derart unabhängig von der ersten Kontakteinheit (8) ansteuerbar ist, dass das erste Kontaktelement (10) in eine erste Ebene (13) und das zweite Kontaktelement (12) in eine sich von der ersten Ebene (13) unterscheidende zweite Ebene (14) anhebbar ist.

2. Vorrichtung nach Anspruch 1, weiterhin umfassend mindestens zwei Transportrollen (15), wobei die Transportrollen (15) in dem Gestell (3) drehbar gehalten sind und wobei die Transportrollen (15) die Transportebene (4) definieren.

3. Vorrichtung nach Anspruch 2, wobei das erste Kontaktelement (8) und das zweite Kontaktelement (12), in einer Transportrichtung (16) betrachtet, jeweils zwischen zwei benachbarten Transportrollen (15) angeordnet sind.

4. Vorrichtung nach einem der vorhergehenden Ansprüche, wobei die erste Kontakteinheit (8) und die zweite Kontakteinheit (9) von einem gemeinsamen Rahmen (17) gehalten sind.

5. Vorrichtung nach Anspruch 4, wobei der Rahmen (17) mittels eines Haupt-Hubwerkzeugs (18) der Hebeeinrichtung (5) anhebbar ist.

6. Vorrichtung nach einem der vorhergehenden Ansprüche, wobei jede zweite Kontakteinheit (9) ein ansteuerbares Hubwerkzeug (19) aufweist, das mit dem zweiten Kontaktelement (12) der zweiten Kontakteinheit (9) verbunden ist.

7. Verfahren zum Transportieren mindestens eines aufgeheizten Bauteils (2), wobei das Verfahren zumindest die folgenden Schritte umfasst:
a) Transportieren des Bauteils (2) in einer Transportebene (4), bis das Bauteil (2) eine Anschlagposition (21) erreicht,
b) automatisches Anpassen einer Hebeeinrichtung (5) in Abhängigkeit einer Geometrie des Bauteils (2), wobei die Hebeeinrichtung (5) in einer vertikalen Richtung (7) betrachtet zumindest teilweise unterhalb der Transportebene (4) angeordnet ist,
c) Anheben des Bauteils (2) von der Transportebene (4) in eine Entnahmeebene (6) mittels der Hebeeinrichtung (5), wobei das Verfahren mit einer Vorrichtung nach einem der Ansprüche 1 bis 6 ausgeübt wird.

8. Verfahren nach Anspruch 7, wobei das automatische Anpassen in Schritt b) durch ein gezieltes Ansteuern zumindest einer ersten Kontakteinheit (8) und/oder zumindest einer zweiten Kontakteinheit (9) erfolgt.

9. Verwendung einer Vorrichtung nach einem der Ansprüche 1 bis 6 zum Transportieren mindestens eines aufgeheizten Bauteils.

## Claims

1. Apparatus (1) for transporting at least one heated component (2), wherein the apparatus (1) comprises at least the following components:
- at least one framework (3), wherein the framework (3) defines a transport plane (4) into which the component (2) can be transported,
- a lifting device (5) which is provided and configured to lift the component (2) from the transport plane (4) into a removal plane (6), wherein the lifting device (5) viewed in a vertical direction (7) is at least partially arranged below the transport plane (4),
wherein the lifting device (5) has at least one first contact unit (8) with a first contact element (10) and at least one second contact unit (9) with a second contact element (12), wherein first and second contact element (12) are provided and configured for contacting at least one partial area of at least one component underside (11), wherein the first contact unit (8) and the second contact unit (9) are mechanically connected to each other so that they can be raised synchronously with each other, wherein the second contact unit (9) can be controlled independently of the first contact unit (8), such that the first contact element (10) can be raised into a first plane (13) and the second contact element (12) can be raised into a second plane (14) which differs from the first plane (13).

2. The apparatus according to claim 1, further comprising at least two transport rollers (15), wherein the transport rollers (15) in the framework (3) are rotatably supported and wherein the transport rollers (15) define the transport plane (4).

3. The apparatus according to claim 2, wherein the first contact element (8) and the second contact element (12), viewed in a transport direction (16), are arranged in each case between two adjacent transport rollers (15).

4. The apparatus according to any of the preceding claims, wherein the first contact unit (8) and the second contact unit (9) are held by a common frame (17).

5. The apparatus according to claim 4, wherein the frame (17) can be raised by means of a main lifting tool (18) of the lifting device (5).

6. The apparatus according to any of the preceding claims, wherein each second contact unit (9) has a controllable lifting tool (19) which is connected to the second contact element (12) of the second contact unit (9).

7. Method for transporting at least one heated component (2), the method comprising at least the following steps:
a) transporting the component (2) in a transport plane (4) until the component (2) reaches a stop position (21),
b) automatically adapting a lifting device (5) as a function of a geometry of the component (2), wherein the lifting device (5) is arranged in a vertical direction (7) at least partially below the transport plane (4),
c) lifting the component (2) from the transport plane (4) into a removal plane (6) by means of the lifting device (5), wherein the method is executed with a device according to one of the claims 1 to 6.

8. The method according to claim 7, wherein the automatic adjusting in step b) is performed by a targeted controlling of at least one first contact unit (8) and/or at least one second contact unit (9).

9. Use of an apparatus according to any of claims 1 to 6 for transporting at least one heated component.

## Revendications

1. Dispositif (1) destiné au transport d'au moins une pièce chauffée (2), le dispositif (1) comprenant au moins les composants suivants :
- au moins un châssis (3), le châssis (3) définissant un plan de transport (4) dans lequel la pièce (2) peut être transportée,
- un dispositif de levage (5) qui est prévu et conçu pour soulever la pièce (2) à partir du plan de transport (4) dans un plan de prélèvement (6), le dispositif de levage (5) étant disposé au moins partiellement en dessous du plan de transport (4), considéré dans une direction verticale (7),
le dispositif de levage (5) présentant au moins une première unité de contact (8) dotée d'un premier élément de contact (10) et au moins une deuxième unité de contact (9) dotée d'un deuxième élément de contact (12), le premier et le deuxième élément de contact (12) étant prévus et conçus pour venir en contact avec au moins une région partielle d'au moins un côté inférieur de pièce (11), la première unité de contact (8) et la deuxième unité de contact (9) étant reliées mécaniquement l'une à l'autre de telle sorte qu'elles puissent être soulevées de manière synchrone l'une avec l'autre, la deuxième unité de contact (9) pouvant être commandée indépendamment de la première unité de contact (8) de telle sorte que le premier élément de contact (10) puisse être soulevé dans un premier plan (13) et que le deuxième élément de contact (12) puisse être soulevé dans un deuxième plan (14) différent du premier plan (13).

2. Dispositif selon la revendication 1, comprenant en outre au moins deux rouleaux de transport (15), les rouleaux de transport (15) étant retenus de manière rotative dans le châssis (3) et les rouleaux de transport (15) définissant le plan de transport (4).

3. Dispositif selon la revendication 2, le premier élément de contact (8) et le deuxième élément de contact (12), considérés dans une direction de transport (16), étant disposés respectivement entre deux rouleaux de transport (15) adjacents.

4. Dispositif selon l'une des revendications précédentes, la première unité de contact (8) et la deuxième unité de contact (9) étant retenues par un cadre (17) commun.

5. Dispositif selon la revendication 4, le cadre (17) pouvant être soulevé au moyen d'un outil de levage principal (18) du dispositif de levage (5).

6. Dispositif selon l'une des revendications précédentes, chaque deuxième unité de contact (9) présentant un outil de levage (19) pouvant être commandé, lequel est relié au deuxième élément de contact (12) de la deuxième unité de contact (9).

7. Procédé destiné au transport d'au moins une pièce chauffée (2), le procédé comprenant au moins les étapes suivantes :
a) transport de la pièce (2) dans un plan de transport (4), jusqu'à ce que la pièce (2) atteigne une position de butée (21),
b) adaptation automatique d'un dispositif de levage (5) en fonction d'une géométrie de la pièce (2), le dispositif de levage (5) étant disposé au moins partiellement en dessous du plan de transport (4), considéré dans une direction verticale (7),
c) soulèvement de la pièce (2) à partir du plan de transport (4) dans un plan de prélèvement (6) au moyen du dispositif de levage (5), le procédé étant effectué à l'aide d'un dispositif selon l'une des revendications 1 à 6.

8. Procédé selon la revendication 7, l'adaptation automatique à l'étape b) s'effectuant par une commande ciblée d'au moins une première unité de contact (8) et/ou d'au moins une deuxième unité de contact (9).

9. Utilisation d'un dispositif selon l'une des revendications 1 à 6 pour le transport d'au moins une pièce chauffée.
